# EUROPEAN PATENT SPECIFICATION

(11) **EP 3 798 119 B1**
(45) Date of publication and mention of the grant of the patent: **22.02.2023**
(21) Application number: 19290097.5
(22) Date of filing: 30.09.2019
(51) Int. Cl.: B64C 11/48, B64C 27/10, B64C 11/30, B64D 27/02

(54) **DRIVE SYSTEM FOR COUNTER-ROTATING PARTS**
ANTRIEBSSYSTEM FÜR GEGENLÄUFIG ROTIERENDE TEILE
SYSTÈME D'ENTRAÎNEMENT POUR PIÈCES CONTRAROTATIVES

(43) Date of publication of application: 31.03.2021
(73) Proprietor: Ratier-Figeac SAS, 46101 Figeac Cedex (FR)
(72) Inventor: Seminel, Bruno, 46100 Figeac (FR)
(74) Representative: Dehns

(56) References cited:
- EP-A1- 2 202 143
- DE-A1- 10 050 161
- DE-A1- 10 111 910
- GB-A- 2 542 184
- JP-A- 2005 067 436

## Description

### TECHNICAL FIELD

The present disclosure is concerned with drive systems for driving counter-rotating parts such as counter-rotating propellers or parts of a counter-rotating turbofan. In the foregoing, counter-rotating includes two parts rotating in opposite directions, or one part rotating relative to another, stationary part. The term will also include so-called contra-rotating propellers. Such systems find application particularly, but not exclusively in aircraft.

### BACKGROUND

Some aircraft manufacturers have developed counter-rotating propellers (CRPs) having two propellers which rotate in opposite directions. Often, the term counter-rotating propellers is used for two propellers rotating on different axes e.g. in twin propeller aircraft, where the right-hand propeller rotates in the opposite direction to the left-hand propeller. Counter-rotating propellers balance the effects of torque and P-factor, meaning that such aircraft do not rely on one critical engine in the case of engine failure. Where two propellers are mounted on the same axis but are driven to rotate in opposite directions, the more correct term is contra-rotating propellers, but often the terms counter-rotating and contra-rotating are used interchangeably. Where one propeller is mounted behind the other and rotates in the opposite direction, rotational air flow of one propeller is cancelled out by the other, thus pushing a maximum amount of air uniformly through the propeller disk, resulting in high performance and low induced energy loss.

The counter-rotating parts are driven by a single gas turbine engine and a gearbox is provided to drive the two parts in opposite directions. Such a gearbox requires multiple parts and has a complex architecture.

Other systems also include one component that rotates relative to another. For example, modern turbofan engines incorporate both a cold and a hot air flux path. The cold flux path provides up to 80% of the total thrust of the engine. The system is composed of a fan rotated by the engine, and a static outlet guide vane assembly which acts to reduce or eliminate the 'swirl' generated by the fan in order to maximise propulsion efficiency.

For environmental, efficiency and also gas attrition reasons, there is now a trend to greater use of electrical engines or drives in propulsion and in aircraft and other vehicles generally. Aircraft and other vehicles are now being developed using hybrid or purely electric drive systems. For aircraft, for example, one such development is 'parallel hybridation' whereby a propeller is driven via a gearbox which is connected to both a combustion engine and to an electric motor. In situations where there is a high power demand, e.g. during take-off and climb, both the combustion engine (also referred to as a thermal engine) and the electric motor are used to develop a high torque to rotate the propeller. In low power conditions, e.g. at cruise, only the thermal engine is used to drive the propeller. Because the electric motor is only switched in when there is a high power demand, the size of the electric motor and of the electrical supply system (batteries, fuel cell(s), supercapacitor(s) etc.) can be minimised. This is a particularly important consideration in aircraft where size and weight of components should be kept as low as possible without compromising safety and reliability.

It would be desirable to provide a drive system for counter-rotating parts that does not require a complex gearbox and that can make use of electric motors, whilst retaining the advantages of having two relatively rotating parts such as oppositely rotating propellers as well as ensuring reliability, safety, efficiency and low size and weight. GB2542184A relates to an aircraft comprising a boundary layer ingesting propulsor including two counter-rotating propulsors. DE101 11910A1 relates to a hybrid propulsion system for maritime craft. JP2005067436A relates to a ship propulsion unit. EP2202143A1 relates to a contra-rotating propeller propulsion system for ships. DE10050161A1 relates to an exhaust gas turbocharger for an internal combustion engine.

### SUMMARY

According to this disclosure, there is provided an aircraft propulsion system according to claim 1.

Optional features of the invention are set out in the dependent claims.

### BRIEF DESCRIPTION OF THE DRAWINGS

Preferred embodiments will now be described, by way of example only, with reference to the drawings.
Figure 1 is a schematic view of a conventional counter-rotating propeller assembly (prior art).
Figure 2 is a schematic view of hybrid propeller drive assembly (prior art).
Figure 3 is a schematic view of an arrangement according to this disclosure.

### DETAILED DESCRIPTION

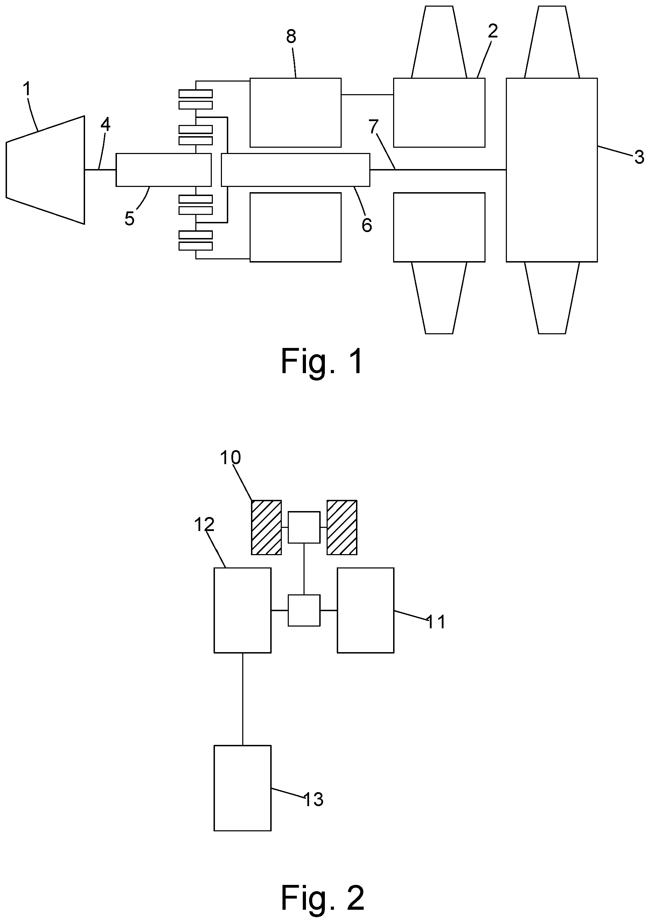

Known systems are shown in Figs. 1 and 2.

Fig. 1 is a schematic view of a known counter-rotating propeller having a combustion engine 1 arranged to drive two propellers 2,3 mounted on an axis 4, in opposite directions, by means of a gear assembly. In the example shown, the sun gear 5 engages with, and causes rotation in a first direction, of a planetary carrier 6 that rotates a shaft 7 to drive a rear propeller 3. The sun gear 5 engages with, and causes rotation in the opposite direction, of a ring gear 8 that rotates a shaft A to drive a front propeller 2.

Fig. 2 is a schematic view of a hybrid propeller drive assembly where a propeller is driven by a combustion engine and an electric motor. As describes above, in certain flight conditions, the propeller 10 is driven by both a combustion engine 11 and an electric motor 12 (powered e.g. by a battery 13). In other flight conditions, the propeller is driven only by the combustion engine.

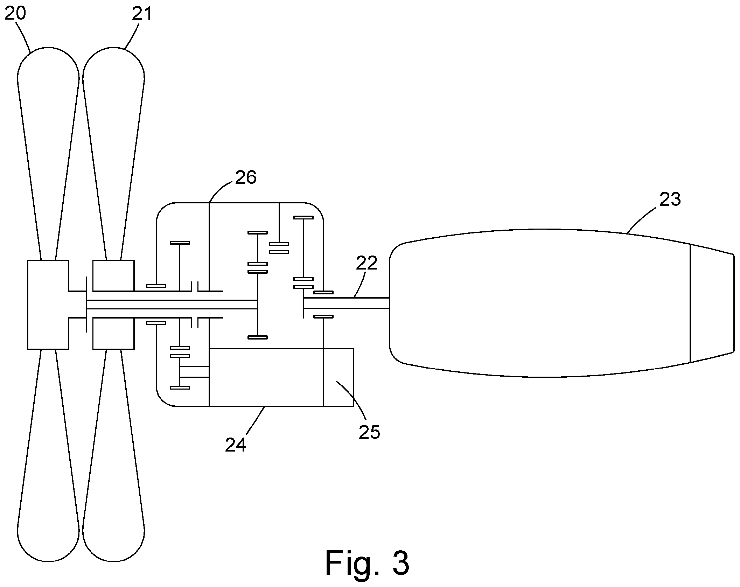

A system according to this disclosure is shown in Fig. 3. Fig. 3 shows, by way of example only, a counter-rotating propeller arrangement. The principles described below can, however, be applied to other counter-rotating parts such as counter-rotating fans in a turbofan arrangement.

First rotating propeller 20 and second rotating propeller 21 are mounted onto a common axis 22. The first rotating propeller is arranged to be rotated by a combustion engine 23, whereas the second rotating propeller is arranged to be rotated by an electric motor 24. A friction brake 25 may be provided in the drive line of the second rotating propeller.

Although there may be a drive shaft between the electric motor and propellers, in various embodiments the motor is installed in the propeller hub to remove the need for this additional assembly.

A motor controller (e.g., processor or circuitry) (not shown) may be configured to control operation of the electric motor. The controller may be incorporated within the system or, alternatively, the controller could at least partially be incorporated remotely, for example as part of an engine management system of the aircraft. The engine management system may be located anywhere on the aircraft, for example in the cockpit, or even (e.g., in the case of an unmanned aerial vehicle) remotely from the aircraft. Part of the motor controller may be located within the engine (e.g., the driving electronics) and part of the controller (e.g., a control system for controlling the driving electronics) could be located at a remote location, for example elsewhere on the aircraft or remotely from the aircraft.

The system may further comprise one or more power sources (not shown), for example one or more batteries, fuel cells, supercapacitor, or an auxiliary power unit ("APU"), optionally with a thermal engine acting as the power source, etc.

It has been noted that certain characteristics of an electric motor are quite different to those of internal combustion engines. For example, the torque characteristics of an electric motor are generally quite flat or constant, in that an electric motor delivers a substantially constant torque from rest (or zero RPM) and through to its maximum RPM. In addition, the direction of rotation may be reversed, which is not typically the case for an internal combustion engine, and certainly not a gas turbine engine. Furthermore, an electric motor can in certain operating modes operate as a generator and provide a controllable torque that is configured to resist rotation of the rotor thereof.

In a first drive mode, such as when high power is required e.g. during take-off or climb of an aircraft, both the thermal engine 23 and the electric motor 24 will be operated to provide high torque to their respective propeller 20,21 to drive the propellers in opposite directions to each other - i.e. one clockwise, the other anticlockwise.

In a second drive mode, where the power requirement is lower, e.g. during flight of the aircraft, only the thermal engine 23 continues to drive its propeller 20 at the high power.

For the electric engine 24 and the second propeller 21, the electric engine no longer drives its propeller in the opposite direction.

Instead, for example, the electric motor may be arranged to stop rotation of the propeller. This may be done by switching the motor off. A more effective stopping may be provided using a friction brake 25 to stop the counter-rotation of the second propeller. Ideally, the second propeller will be stopped at a position at which the pitch of the propeller blades relative to the rotating first propeller are set to reduce drag between the two propellers in this mode. This will then act like an outlet guide vane of a turbofan as described above to reduce or eliminate the swirl in the flow field of the first propeller. The resulting increase in propulsion efficiency will offset, at least partially, the drag losses caused by the second propeller blades. The blade pitch of the second propeller blades can be adjusted to offer the best compromise between reduction of second propeller drag and increase in first propeller propulsion efficiency by reducing flow field swirl. The same applies if the first and second propeller are swapped around. As an alternative to a brake, by proper control of the propeller pitch of the second propeller as well as the resistive torque of the electric motor via rotor supply current/voltage, the second propeller drag and the first propeller swirl can be reduced to some extent.

In the third mode, the electric motor can be used as a generator (or alternator) to charge batteries, which are then available to provide power quickly if needed e.g. in the case of an emergency or if rapid turnaround is required on landing. Here, the second propeller is rotated by the flow field of the first, generally in the same direction.

With the configuration of this disclosure, on landing, the reverse thrust needed to decelerate the aircraft can be obtained by setting the thermal engine at minimum power and its corresponding propeller to low pitch. This reduces forward thrust and limits windmilling speed. At the same time, the electric motor 24 can be powered in the reversed direction at high power with the second propeller pitch set to maximise thrust in the reverse direction whilst keeping the propeller rpm within acceptable limits. In more detail, the controller may be configured to receive a command that the engine should be operated in a reverse thrust mode, and upon receiving such command may decelerate the propellers from a first rotational direction down to zero RPM, and then (e.g. immediately) accelerate the propellers in a second rotational direction up to a sufficient RPM to provide a thrust reversing capability (e.g., so that a speed of the aircraft reduces but may also be to offer capability to backup aircraft). The first rotational direction of the propellers may be configured to drive the aircraft forwards, whilst the second rotational direction of the propellers may be configured to brake, decelerate or slow the aircraft. In various embodiments, the second rotational direction of the propellers may be configured to propel the aircraft in a reverse direction.

The controller may be configured to operate the electric motor 24 so that it provides a controlled (e.g. constant) braking torque, and may be configured to control the motor such that the motor RPM increases in the reverse direction in line with the reverse thrust demand of any particular situation. These modes of operation permits a fast transition from forward thrust to reverse thrust, and are based on the recognition that the high torque of the electric motor is able to provide this quick transition even at high airspeed or landing speeds of the aircraft, or at low propeller RPMs. As mentioned above, the same principle can be used on turbofan engines (not shown). Instead of the outlet guide vane assembly being static, this can be replaced by a second counter-rotating fan driven by an electric motor and, optionally, with a friction brake to stop rotation. In this case, reverse thrust can be generated by 2^{nd} fan row as described above as an alternative to conventional turbofans thrust reversers' panels.

Using the system of this disclosure, there is no need for a complex gearbox design to allow one engine to drive two oppositely rotating propellers. Instead, each propeller is rotated by its own motor via a simple gearing 26.

With conventional systems, as described above, there will be a large reduction in the power absorbed by each of the two propellers during flight as compared to on take-off/climb. In contrast, with the present system, the thermal engine and the propeller it is driving operate with high power at all flight phases. This means that the aerodynamic design of the propeller blades for both propellers as well as the thermal and electric motors can be better optimised thus reducing drag losses and maximizing propulsion efficiency.

In addition, in conventional systems, the pitch change rotates the propeller blades until the trailing edge becomes the leading edge, to produce reverse thrust. With the present arrangement, because the electric motor is able to change direction of rotation of the propeller to produce reverse airflow, the range of pitch change can be reduced.

In the case where the electric motor is used as an alternator in the second drive mode, there is no need for battery replacement between flights which reducing turnaround time and work.

The described embodiments are by way of example only. The scope of this disclosure is limited only by the claims.

## Claims

1. An aircraft propulsion system comprising a rotating assembly, the rotating
assembly comprising a first rotating part (20) and a second part (21), wherein the first rotating part (20) is rotatable relative to a second part (21), the first and second parts mounted on a common axis (22), a combustion engine (23) arranged to rotate the first part, and an electric motor (24) connected to drive the second part, whereby in a first drive mode, the combustion engine (23) rotates the first part (20) in a first direction relative to the axis while the electric motor (24) drives the second part (21) in a second, opposite direction relative to the axis and
**characterised in that**
in a second drive mode, the combustion engine rotates the first part in the first direction and the electric motor does not drive the second part in the second, opposite direction; and **in that** the electric motor (24) is configured to operate in a third mode to recover energy by windmilling.

2. The aircraft propulsion system of claim 1, wherein, in the second drive mode, the electric motor (24) stops rotation of the second part.

3. The aircraft propulsion system of claim 1, wherein the electric motor (24), in the second drive mode, rotates the second part in the first direction.

4. The aircraft propulsion system of any preceding claim, further comprising an aircraft, and wherein the first and second rotating parts are counter-rotating propellers (20,21) of the aircraft.

5. The aircraft propulsion system of any preceding claim wherein, in a fourth drive mode, the electric motor (24) reverses the direction of rotation from the second direction to the first direction to provide a reverse thrust.

6. The aircraft propulsion system of any preceding claim, further comprising a turbofan assembly, and wherein the first and second rotating parts are fans of a turbofan assembly.

7. The aircraft propulsion system of any preceding claim wherein the electric motor is provided with a friction brake (25) to stop rotation of the second part.

## Patentansprüche

1. Luftfahrzeugantriebssystem, umfassend eine rotierende Baugruppe, wobei die rotierende Baugruppe einen ersten rotierenden Teil (20) und einen zweiten Teil (21) umfasst, wobei der erste rotierende Teil (20) relativ zu einem zweiten Teil (21) rotierbar ist, wobei der erste und der zweite Teil auf einer gemeinsamen Achse (22) angebracht sind, einen Verbrennungsmotor (23), der so angeordnet ist, dass er den ersten Teil rotieren lässt, und einen Elektromotor (24), der so verbunden ist, dass er den zweiten Teil antreibt, wobei in einem ersten Antriebsmodus der Verbrennungsmotor (23) den ersten Teil (20) in einer ersten Richtung relativ zu der Achse rotieren lässt, während der Elektromotor (24) den zweiten Teil (21) in einer zweiten, entgegengesetzten Richtung relativ zu der Achse antreibt, und **dadurch gekennzeichnet, dass**
in einem zweiten Antriebsmodus der Verbrennungsmotor den ersten Teil in der ersten Richtung rotieren lässt und der Elektromotor den zweiten Teil nicht in der zweiten, entgegengesetzten Richtung antreibt;
und dadurch, dass der Elektromotor (24) so konfiguriert ist, dass er in einem dritten Modus arbeitet, um Energie durch Windmühlenbetrieb zu gewinnen.

2. Luftfahrzeugantriebssystem nach Anspruch 1, wobei der Elektromotor (24) im zweiten Antriebsmodus die Rotation des zweiten Teils stoppt.

3. Luftfahrzeugantriebssystem nach Anspruch 1, wobei der Elektromotor (24) im zweiten Antriebsmodus den zweiten Teil in der ersten Richtung rotieren lässt.

4. Luftfahrzeugantriebssystem nach einem der vorhergehenden Ansprüche, das ferner ein Luftfahrzeug umfasst, wobei der erste und der zweite rotierende Teil gegenläufige Propeller (20, 21) des Luftfahrzeugs sind.

5. Luftfahrzeugantriebssystem nach einem der vorhergehenden Ansprüche, wobei der Elektromotor (24) in einem vierten Antriebsmodus die Rotationsrichtung von der zweiten Richtung in die erste Richtung umkehrt, um einen Umkehrschub bereitzustellen.

6. Luftfahrzeugantriebssystem nach einem der vorhergehenden Ansprüche, das ferner eine Turbofan-Baugruppe umfasst, wobei der erste und der zweite rotierende Teil Fans einer Turbofan-Baugruppe sind.

7. Luftfahrzeugantriebssystem nach einem der vorhergehenden Ansprüche, wobei der Elektromotor mit einer Reibungsbremse (25) versehen ist, um die Rotation des zweiten Teils zu stoppen.

## Revendications

1. Système de propulsion d'aéronef comprenant un ensemble de rotation, l'ensemble de rotation comprenant une première partie de rotation (20) et une seconde partie (21), dans lequel la première partie de rotation (20) est rotative par rapport à une seconde partie (21), les première et seconde parties montées sur un axe commun (22), un moteur à combustion (23) agencé pour faire tourner la première partie, et un moteur électrique (24) connecté pour entraîner la seconde partie, moyennant quoi, dans un premier mode d'entraînement, le moteur à combustion (23) fait tourner la première partie (20) dans une première direction par rapport à l'axe tandis que le moteur électrique (24) entraîne la seconde partie (21) dans une seconde direction opposée par rapport à l'axe et **caractérisé en ce que**
dans un deuxième mode d'entraînement, le moteur de combustion fait tourner la première partie dans la première direction et le moteur électrique n'entraîne pas la seconde partie dans la seconde direction opposée ;
et **en ce que** le moteur électrique (24) est configuré pour fonctionner dans un troisième mode de récupération d'énergie par moulinet.

2. Système de propulsion d'aéronef selon la revendication 1, dans lequel, dans le deuxième mode d'entraînement, le moteur électrique (24) arrête la rotation de la seconde partie.

3. Système de propulsion d'aéronef selon la revendication 1, dans lequel le moteur électrique (24), dans le deuxième mode d'entraînement, fait tourner la seconde partie dans la première direction.

4. Système de propulsion d'aéronef selon une quelconque revendication précédente, comprenant en outre un aéronef, et dans lequel les première et seconde parties rotatives sont des hélices contrarotatives (20, 21) de l'aéronef.

5. Système de propulsion d'aéronef selon une quelconque revendication précédente dans lequel, dans un quatrième mode d'entraînement, le moteur électrique (24) inverse la direction de rotation de la seconde direction à la première direction pour fournir une poussée inverse.

6. Système de propulsion d'aéronef selon une quelconque revendication précédente, comprenant en outre un ensemble turbosoufflante, et dans lequel les première et seconde parties rotatives sont des soufflantes d'un ensemble turbosoufflante.

7. Système de propulsion d'aéronef selon une quelconque revendication précédente dans lequel le moteur électrique est pourvu d'un frein à friction (25) pour arrêter la rotation de la seconde partie.
